# EUROPEAN PATENT APPLICATION

(11) **EP 4 692 152 A1**
(43) Date of publication of application: **11.02.2026**
(21) Application number: 24779555.2
(22) Date of filing: 15.03.2024
(51) Int. Cl.: C08G 59/08, C08G 8/06, C08J 5/04

(54) **EPOXY RESIN, CURABLE RESIN COMPOSITION, AND CURED PRODUCT**

(30) Priority: 30.03.2023 JP 2023055548
(71) Applicant: Nippon Kayaku Kabushiki Kaisha, Tokyo 100-0005 (JP)
(72) Inventor: KONDO, Hiroki, Tokyo 115-8588 (JP); IMAI, Takashi, Tokyo 115-8588 (JP); TERADA, Kiwamu, Tokyo 115-8588 (JP); NAKANISHI, Masataka, Tokyo 115-8588 (JP)
(74) Representative: Becker, Eberhard
(86) International application number: PCT/JP2024/010157
(87) International publication number: WO 2024/203426

(57) **Abstract**

The present invention provides: an epoxy resin which has a high elastic modulus and excellent low water absorption; and a curable resin composition which contains the epoxy resin. The present invention specifically provides an epoxy resin represented by formula (1) (In formula (1), a plurality of R₁ moieties each independently represent a hydrocarbon group having 1 to 10 carbon atoms. R₂ moiety represents a hydrogen atom or a hydrocarbon group having 1 to 10 carbon atoms. n is the average value of repetitions, and is a real number satisfying 1 < n < 15.)

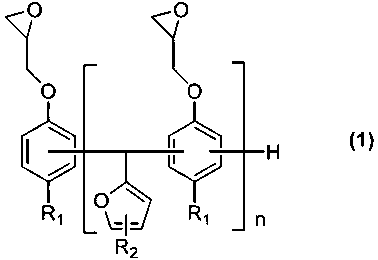

## Description

### Technical Field

The present invention relates to an epoxy resin, a curable resin composition, and a cured product.

### Background Technology

An epoxy resin, when cured with various curing agents, becomes a cured product that is excellent in mechanical properties, water resistance, chemical resistance, heat resistance, electrical properties, etc., and is utilized in a wide range of fields such as adhesives, paints, laminates, molding materials, and casting materials. A carbon fiber reinforced composite material (CFRP), obtained by impregnating reinforcing fibers with an epoxy resin and a curing agent as the matrix resin and curing the mixture, can provide characteristics such as weight reduction and high strength, and therefore has been widely deployed in aircraft structural members, wind turbine blades, automobile outer panels, and computer applications such as IC trays and laptop computer housings in recent years, with increasing demand. In particular, taking advantage of the weight reduction and high strength characteristics of the molded product thereof, such a material is used in the matrix resin for aircraft applications.

A CFRP material is required to have high mechanical strength, but the thermosetting resin such as the epoxy resin used in the matrix resin for CFRP is generally brittle and has low bending strength, toughness, adhesiveness, etc. Therefore, a widely adopted method is to add a thermoplastic resin with high toughness to the thermosetting resin to supplement the characteristics (Patent Documents 1 to 3). Specifically, the bending strength and toughness of the prepreg are improved by combining particles of the thermoplastic resin such as polyethersulfone, polyetherimide, and polyamide with the thermosetting resin.

### Related Art Documents

### Patent Documents

Patent Document 1: Japanese Patent Application Laid-Open No. S60-243113
Patent Document 2: Japanese Patent Application Laid-Open No. H09-100358
Patent Document 3: Japanese Patent Application Laid-Open No. 2013-155330
Patent Document 4: Japanese Patent Application Laid-Open No. 2007-211254

### SUMMARY OF INVENTION

### Problem to be Solved by the Invention

In recent years, a higher elastic modulus has been strongly demanded for thermosetting resin in order to obtain a further high-performance CFRP material. This is because filling and bonding a thermosetting resin with a high elastic modulus between carbon fibers allows stress to be transmitted through the thermosetting resin to adjacent CF filaments, enabling many CF filaments to contribute to material strength development, and achieving high strength as a composite material. Furthermore, further reduction in water absorption has also been demanded for thermosetting resin to prevent dimensional change and reduction in mechanical strength due to moisture absorption.

Patent Document 4 describes an epoxy resin with low water absorption. However, the epoxy resin described in Patent Document 4 does not have performance that satisfies the characteristics demanded by the market in recent years.

The present invention has been made in view of the above situation, and an object thereof is to provide an epoxy resin having a high elastic modulus and excellent low water absorption, and a curable resin composition containing the epoxy resin.

### Means for Solving the Problem

That is, the present invention is as shown in the following [1] to [5]. In the present application, "(numerical value 1) to (numerical value 2)" indicates that the upper and lower limit values are included.
[1] An epoxy resin, represented by the following formula (1). 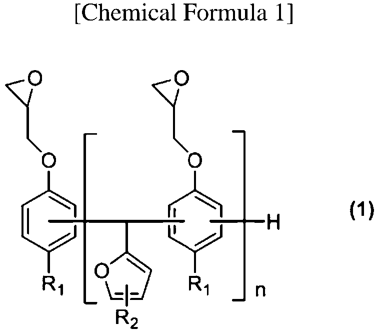 (In formula (1), multiple R₁ independently represent a hydrocarbon group having 1 to 10 carbon atoms. R₂ represents a hydrogen atom or a hydrocarbon group having 1 to 10 carbon atoms. n is an average value of the number of repetitions and is a real number satisfying 1<n<15.)
[2] The epoxy resin according to the above [1], in which R₁ in the formula (1) is a methyl group.
[3] A curable resin composition, including the epoxy resin according to the above [1] or [2], and a curing agent.
[4] The curable resin composition according to the above [3], which is for carbon fiber reinforced plastic.
[5] A cured product, obtained by curing the curable resin composition according to the above [3] or [4].

### Effects of the Invention

According to the present invention, it is possible to provide an epoxy resin having a high elastic modulus and excellent low water absorption, and a curable resin composition containing the epoxy resin.

### BRIEF DESCRIPTION OF THE DRAWINGS

[FIG. 1] is a high performance liquid chromatography chart of the epoxy resin of Synthesis Example 2.
[FIG. 2] is a GPC chart of the epoxy resin of Synthesis Example 2.
[FIG. 3] is a high performance liquid chromatography chart of the epoxy resin of Comparative Synthesis Example 2.
[FIG. 4] is a high performance liquid chromatography chart of the epoxy resin of Comparative Synthesis Example 4.

### DESCRIPTION OF THE EMBODIMENTS

The epoxy resin of the present embodiment is represented by the following formula (1).

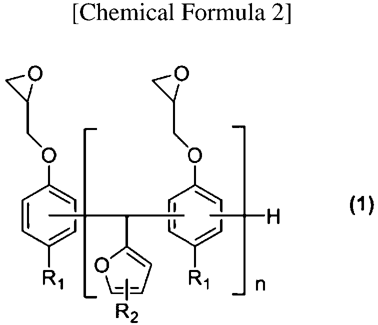

In formula (1), multiple R₁ independently represent a hydrocarbon group having 1 to 10 carbon atoms, preferably a hydrocarbon group having 1 to 3 carbon atoms, and more preferably a methyl group. R₂ represents a hydrogen atom or a hydrocarbon group having 1 to 10 carbon atoms, preferably a hydrogen atom or a hydrocarbon group having 1 to 3 carbon atoms, and more preferably a hydrogen atom. n is an average value of the number of repetitions, preferably a real number satisfying 1<n<15, more preferably 1<n<10, and particularly preferably 1<n<5.

Examples of the hydrocarbon group having 1 to 10 carbon atoms represented by R₁ and R₂ in formula (1) include alkyl groups, allyl groups, phenyl groups, and alkoxy groups. Examples of alkyl groups include methyl group, ethyl group, propyl group, butyl group, pentyl group, hexyl group, heptyl group, octyl group, nonyl group, decyl group, etc. Examples of alkoxy groups include methoxy group and ethoxy group.

In the formula (1), the value of n can be calculated from the number average molecular weight determined by gel permeation chromatography (GPC, detector: RI) measurement of the epoxy resin, or from the area ratio of each separated peak.

In the present embodiment, gel permeation chromatography analysis is measured under the following conditions.
• GPC (gel permeation chromatography) analysis

Manufacturer: Waters
Column: Guard column SHODEX GPC KF-601, KF-602 KF-602.5, KF-603
Flow rate: 0.5 ml/min.
Column temperature: 40°C
Solvent used: THF (tetrahydrofuran)
Detector: RI (differential refractive index detector)

The epoxy equivalent of the epoxy resin of the present embodiment is preferably 240 g/eq. or more and 260 g/eq. or less, and more preferably 245 g/eq. or more and less than 255 g/eq. In the case of the epoxy equivalent being 240 g/eq. or more, heat resistance is good, and in the case of 260 g/eq. or less, high strength is obtained.

The epoxy resin of the present embodiment preferably has a resinous form having a softening point, and the softening point is preferably 40°C or higher and 80°C or lower, and more preferably 60°C or higher and 70°C or lower. In the case of the softening point being 40°C or higher, it means that the molecular weight distribution is appropriate or there is no residue of solvent or the like, and problems such as poor curing and voids during molding can be suppressed. Conversely, in the case of the softening point being 80°C or lower, handling during kneading with other resins is good.

The ICI melt viscosity (150°C) is preferably 0.01 Pa·s to 0.15 Pa·s, and more preferably 0.01 Pa·s to 0.10 Pa·s. In the case of the viscosity being higher than 0.15 Pa·s, problems occur in fluidity, and problems arise in flowability and embedding properties during pressing, which is not preferable.

The epoxy resin represented by the formula (1) can be obtained by reaction of a phenolic resin represented by the following formula (2) with epihalohydrin.

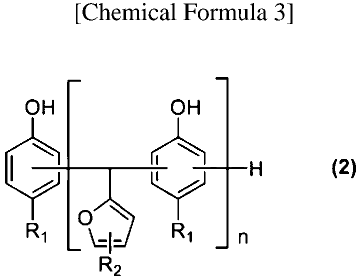

The values and preferable ranges of R₁, R₂, and n in the formula (2) are the same as in the formula (1).

The epihalohydrin can be easily obtained from the market. The usage amount of epihalohydrin is usually 2.0 mol to 10 mol, preferably 3.0 mol to 8.0 mol, and more preferably 3.5 mol to 6.0 mol, per 1 mol of hydroxyl groups in the raw material phenol mixture.

In the above reaction, alkali metal hydroxides can be used as a catalyst to promote the epoxidation step. Examples of alkali metal hydroxides that can be used include sodium hydroxide, potassium hydroxide, etc., and a solid material may be utilized or an aqueous solution thereof may be used. However, in the present embodiment, the use of a solid material molded into a flake form is particularly preferable from the viewpoint of solubility and handling.

The usage amount of the alkali metal hydroxide is usually 0.90 mol to 1.5 mol, preferably 0.95 mol to 1.25 mol, and more preferably 0.99 mol to 1.15 mol, per 1 mol of hydroxyl groups in the raw material phenol mixture.

Additionally, quaternary ammonium salts such as tetramethylammonium chloride, tetramethylammonium bromide, and trimethylbenzylammonium chloride may be added as a catalyst to promote the reaction. The usage amount of the quaternary ammonium salt is usually 0.1 g to 15 g, and preferably 0.2 g to 10 g, per 1 mol of hydroxyl groups in the raw material phenol mixture.

The reaction temperature is usually 30°C to 90°C, and preferably 35°C to 80°C. Particularly, in the present embodiment, 50°C or higher is preferable for higher purity epoxidation, and 60°C or higher is particularly preferable. The reaction time is usually 0.5 hours to 10 hours, preferably 1 hour to 8 hours, and particularly preferably 1 hour to 3 hours. In the case of the reaction time being short, the reaction does not proceed completely, and in the case of the reaction time being long, by-products are formed, which is not preferable.

These reaction products of the epoxidation reaction are washed with water, or epihalohydrin, solvents, etc. are removed under heating and reduced pressure without water washing. Furthermore, in order to obtain an epoxy resin with less hydrolyzable halogen, the recovered epoxy resin can be dissolved using a ketone compound having 4 to 7 carbon atoms (for example, methyl isobutyl ketone, methyl ethyl ketone, cyclopentanone, cyclohexanone, etc.) as a solvent, and an aqueous solution of an alkali metal hydroxide such as sodium hydroxide and potassium hydroxide can be added to carry out the reaction, thereby ensuring ring closure. In this case, the usage amount of the alkali metal hydroxide is usually 0.01 mol to 0.3 mol, and preferably 0.05 mol to 0.2 mol, per 1 mol of hydroxyl groups in the raw material phenol mixture used for epoxidation. The reaction temperature is usually 50°C to 120°C, and the reaction time is usually 0.5 hours to 2 hours.

After completion of the reaction, the formed salt is removed by filtration, water washing, and the like, and the solvent is further distilled off under heating and reduced pressure to obtain the epoxy resin of the present embodiment.

The phenolic resin represented by the formula (2) can be obtained, for example, by condensation reaction between furfural and phenols. At this time, the phenols are preferably used in a range of 1.5 mol to 20 mol, and particularly preferably 3 mol to 10 mol, per 1 mol of furfural.

Specific examples of phenols that can be used include cresol, xylenol, trimethylphenol, octylphenol, phenylphenol, diphenylphenol, guaiacol, hydroquinone, resorcinol, catechol, allylphenol, etc., and each is preferably used alone or in combination.

Examples of solvents include methanol, ethanol, propanol, isopropanol, toluene, xylene, etc., but are not limited thereto, and these may be used alone or in combination of two or more. In the case of using a solvent, the usage amount thereof is usually in a range of 5 parts by weight to 500 parts by weight, and preferably 10 parts by weight to 300 parts by weight, per 100 parts by weight of phenol.

In the above condensation reaction, it is preferable to use a base catalyst. Although polycondensation is possible with an acidic catalyst, there is also reaction among furfural, resulting in more by-products. There is also a method using organometallic compounds, but this method is disadvantageous in terms of cost. Specific examples of basic catalysts include alkali metal hydroxides such as lithium hydroxide, sodium hydroxide, and potassium hydroxide; alkaline earth metal hydroxides such as magnesium hydroxide and calcium hydroxide; alkali metal alkoxides such as sodium methoxide, sodium ethoxide, potassium methoxide, potassium ethoxide, and potassium-tert-butoxide; alkaline earth metal alkoxides such as magnesium methoxide and magnesium ethoxide; etc., but are not limited thereto, and these may be used alone or in combination of two or more. The usage amount of the catalyst is usually 0.005 times mol to 2.0 times mol, and preferably 0.01 times mol to 1.1 times mol, per 1 mol of phenol.

The condensation reaction in the presence of these base catalysts is preferably carried out in a range of 40°C to 180°C, and particularly preferably in a range of 80°C to 165°C, and the reaction time can usually be selected in a range of 0.5 house to 10 hours. The reaction product thus obtained is neutralized so that the system becomes neutral or repeatedly washed with water in the presence of a solvent, and after separating and draining the water, the solvent and unreacted materials are removed under heating and reduced pressure to obtain the phenolic resin represented by the formula (2).

The phenolic resin represented by the formula (2) can be combined with commonly disclosed epoxy resins and curing accelerators to produce a curable resin composition. The phenolic resin can also be used as an olefin resin by reaction with cyanate resin raw materials, benzoxazine raw materials, chloromethylstyrene, etc. to react with vinyl benzyl ether, allyl halide/methallyl halide, etc.

The epoxy resin of the present embodiment can be mixed with a curing agent to form a curable resin composition. Examples of curing agents that can be used include amine curing agents, acid anhydride curing agents, amide curing agents, and phenolic curing agents.

In the curable resin composition of the present embodiment, amine curing agents are particularly preferred because amine curing agents can achieve a good balance between the resin viscosity of the curable resin composition and the heat resistance of the cured resin. Examples of amine curing agents include 3,3'-diaminodiphenylsulfone (3,3'-DDS), 4,4'-diaminodiphenylsulfone (4,4'-DDS), diaminodiphenylmethane (DDM), 3,3'-diisopropyl-4,4'-diaminodiphenylmethane, 3,3'-di-t-butyl-4,4'-diaminodiphenylmethane, 3,3'-diethyl-5,5'-dimethyl-4,4'-diaminodiphenylmethane, 3,3'-diisopropyl-5,5'-dimethyl-4,4'-diaminodiphenylmethane, 3,3'-di-t-butyl-5,5'-dimethyl-4,4'-diaminodiphenylmethane, 3,3',5,5'-tetraethyl-4,4'-diaminodiphenylmethane, 3,3'-diisopropyl-5,5'-diethyl-4,4'-diaminodiphenylmethane, 3,3'-di-t-butyl-5,5'-diethyl-4,4'-diaminodiphenylmethane, 3,3',5,5'-tetraisopropyl-4,4'-diaminodiphenylmethane, 3,3'-di-t-butyl-5,5'-diisopropyl-4,4'-diaminodiphenylmethane, 3,3',5,5'-tetra-t-butyl-4,4'-diaminodiphenylmethane, diaminodiphenyl ether (DADPE), bisaniline, benzyldimethylaniline, 2-(dimethylaminomethyl)phenol (DMP-10), 2,4,6-tris(dimethylaminomethyl)phenol (DMP-30), 2-ethylhexanoic acid ester of 2,4,6-tris(dimethylaminomethyl)phenol, etc. Additionally, examples include aniline novolac, orthoethylaniline novolac, aniline resin obtained by reaction of aniline with xylylene chloride, aniline resin obtained by polycondensation of aniline with substituted biphenyls (such as 4,4'-bis(chloromethyl)-1,1'-biphenyl and 4,4'-bis(methoxymethyl)-1,1'-biphenyl) or substituted phenyls (such as 1,4-bis(chloromethyl)benzene, 1,4-bis(methoxymethyl)benzene, and 1,4-bis(hydroxymethyl)benzene), etc.

Examples of acid anhydride curing agents include phthalic anhydride, trimellitic anhydride, pyromellitic anhydride, maleic anhydride, tetrahydrophthalic anhydride, methyltetrahydrophthalic anhydride, methylnadic anhydride, hexahydrophthalic anhydride, methylhexahydrophthalic anhydride, etc.

Examples of amide curing agents include dicyandiamide or polyamide resins synthesized from linolenic acid dimer and ethylenediamine, etc.

Examples of phenolic curing agents include polyhydric phenols (bisphenol A, bisphenol F, bisphenol S, fluorene bisphenol, terpene diphenol, 4,4'-dihydroxybiphenyl, 2,2'-dihydroxybiphenyl, 3,3',5,5'-tetramethyl-(1,1'-biphenyl)-4,4'-diol, hydroquinone, resorcinol, naphthalenediol, tris-(4-hydroxyphenyl)methane, 1,1,2,2-tetrakis(4-hydroxyphenyl)ethane, etc.); phenolic resins obtained by condensation of phenols (for example, phenol, alkyl-substituted phenols, naphthol, alkyl-substituted naphthol, dihydroxybenzene, dihydroxynaphthalene, etc.) with aldehydes (formaldehyde, acetaldehyde, benzaldehyde, p-hydroxybenzaldehyde, o-hydroxybenzaldehyde, furfural, etc.), ketones (p-hydroxyacetophenone, o-hydroxyacetophenone, etc.), or dienes (dicyclopentadiene and tricyclopentadiene, etc.); phenolic resins obtained by polycondensation of the phenols with substituted biphenyls (4,4'-bis(chloromethyl)-1,1'-biphenyl, 4,4'-bis(methoxymethyl)-1,1'-biphenyl, etc.) or substituted phenyls (1,4-bis(chloromethyl)benzene, 1,4-bis(methoxymethyl)benzene, 1,4-bis(hydroxymethyl)benzene, etc.); modified products of the phenols and/or the phenolic resins; and halogenated phenols such as tetrabromobisphenol A and brominated phenolic resins.

In the curable resin composition of the present embodiment, it is preferable to use the phenolic resin represented by the formula (2) as the entire amount of the curing agent or as a part thereof.

In the curable resin composition of the present embodiment, the usage amount of the curing agent is preferably 0.7 to 1.2 equivalents relative to 1 equivalent of epoxy groups in the epoxy resin. In the case of less than 0.7 equivalents relative to 1 equivalent of epoxy groups, or in the case of exceeding 1.2 equivalents, curing becomes incomplete in either case, and there is a risk that good cured product properties cannot be obtained.

In addition, in the curable resin composition of the present embodiment, a curing accelerator may be blended as necessary. The gelation time can also be adjusted by using a curing accelerator. Examples of curing accelerators that can be used include imidazoles such as 2-methylimidazole, 2-ethylimidazole, and 2-ethyl-4-methylimidazole; tertiary amines such as 2-(dimethylaminomethyl)phenol and 1,8-diaza-bicyclo[5,4,0]undecene-7; phosphines such as triphenylphosphine; and metal compounds such as tin octylate. The curing accelerator is used as necessary in an amount of 0.01 parts by weight to 5.0 parts by weight relative to 100 parts by weight of the epoxy resin.

In the curable resin composition of the present embodiment, other epoxy resins may be blended, and specific examples include polycondensates of phenols (phenol, alkyl-substituted phenols, aromatic-substituted phenols, naphthol, alkyl-substituted naphthols, dihydroxybenzene, alkyl-substituted dihydroxybenzene, dihydroxynaphthalene, etc.) with various aldehydes (formaldehyde, acetaldehyde, alkyl aldehydes, benzaldehyde, alkyl-substituted benzaldehydes, hydroxybenzaldehyde, naphthaldehyde, glutaraldehyde, phthalaldehyde, crotonaldehyde, cinnamaldehyde, etc.); polymers of phenols with various diene compounds (dicyclopentadiene, terpenes, vinylcyclohexene, norbornadiene, vinylnorbornene, tetrahydroindene, divinylbenzene, divinylbiphenyl, diisopropenylbiphenyl, butadiene, isoprene, etc.); polycondensates of phenols with ketones (acetone, methyl ethyl ketone, methyl isobutyl ketone, acetophenone, benzophenone, etc.); phenolic resins obtained by polycondensation of phenols with substituted biphenyls (4,4'-bis(chloromethyl)-1,1'-biphenyl, 4,4'-bis(methoxymethyl)-1,1'-biphenyl, etc.) or substituted phenyls (1,4-bis(chloromethyl)benzene, 1,4-bis(methoxymethyl)benzene, 1,4-bis(hydroxymethyl)benzene, etc.); polycondensates of bisphenols with various aldehydes; glycidyl ether epoxy resins obtained by glycidylation of alcohols, etc.; alicyclic epoxy resins represented by 4-vinyl-1-cyclohexene diepoxide and 3,4-epoxycyclohexylmethyl-3,4'-epoxycyclohexane carboxylate; glycidyl amine epoxy resins represented by tetraglycidyl diaminodiphenylmethane (TGDDM) and triglycidyl-p-aminophenol; glycidyl ester epoxy resins, etc. However, the epoxy resins are not limited to these as long as the epoxy resins are commonly used epoxy resins.

In the curable resin composition of the present embodiment, known additives can be blended as necessary. Specific examples of additives that can be used include polybutadiene and modified products thereof, modified products of acrylonitrile copolymers, polyphenylene ether, polystyrene, polyethylene, polyimide, fluorine resins, maleimide compounds, cyanate ester compounds, silicone gel, silicone oil, and inorganic fillers such as silica, alumina, calcium carbonate, quartz powder, aluminum powder, graphite, talc, clay, iron oxide, titanium oxide, aluminum nitride, asbestos, mica, and glass powder, surface treatment agents for fillers such as silane coupling agents, mold release agents, colorants such as carbon black, phthalocyanine blue, and phthalocyanine green, etc.

In the curable resin composition of the present embodiment, known maleimide compounds can be blended as necessary. Specific examples of maleimide compounds that can be used include 4,4'-diphenylmethane bismaleimide, polyphenylmethane maleimide, m-phenylene bismaleimide, 2,2'-bis[4-(4-maleimidophenoxy)phenyl]propane, 3,3'-dimethyl-5,5'-diethyl-4,4'-diphenylmethane bismaleimide, 4-methyl-1,3-phenylene bismaleimide, 4,4'-diphenyl ether bismaleimide, 4,4'-diphenylsulfone bismaleimide, 1,3-bis(3-maleimidophenoxy)benzene, 1,3-bis(4-maleimidophenoxy)benzene, biphenyl aralkyl type maleimide, etc., but are not limited thereto. These may be used alone or in combination of two or more. In the case of blending a maleimide compound, a curing accelerator is blended as necessary, and the aforementioned curing accelerators, organic peroxides, radical polymerization initiators such as azo compounds, and the like can be used.

The curable resin composition of the present embodiment is obtained by uniformly mixing the above components. The production method of the curable resin composition of the present embodiment is not particularly limited, and for example, the curable resin composition can be obtained by sufficiently mixing the epoxy resin with a curing agent, a curing accelerator, an inorganic filler, a mold release agent, a silane coupling agent, additives, and the like using an extruder, a kneader, a roll, a planetary mixer, etc. until uniform.

The obtained curable resin composition can take various forms such as a resin sheet and a prepreg depending on the molding method. The prepreg form can be obtained, for example, by heating and melting the curable resin composition and/or the resin sheet of the present embodiment to reduce viscosity and impregnating a fiber substrate therewith.

The curable resin composition of the present embodiment can be dissolved in solvents such as toluene, xylene, acetone, methyl ethyl ketone, methyl isobutyl ketone, dimethylformamide, dimethylacetamide, N-methylpyrrolidone, etc. as necessary to form a varnish-like composition (hereinafter also simply referred to as varnish), and a prepreg can be prepared by impregnating a substrate such as glass fibers, carbon fibers, polyester fibers, polyamide fibers, alumina fiber, papers, etc. with the varnish, and heating and drying. The solvent in this case is used in an amount occupying 10% by weight to 70% by weight, and preferably 15% by weight to 70% by weight, in the mixture of the curable resin composition of the present embodiment and the solvent.

Carbon fiber reinforced plastic (CFRP) can be obtained by cutting and laminating the above prepreg into a desired shape, and then heating and curing the epoxy resin composition while applying pressure to the laminate by a press molding method, an autoclave molding method, a sheet winding molding method, or the like. Additionally, copper foil or organic film can also be laminated during the lamination of the prepreg.

CFRP can also be obtained by molding using known methods in addition to the above methods. For example, a resin transfer molding technique (RTM method) can be used, in which a carbon fiber substrate (usually carbon fiber fabric is used) is cut, laminated, and shaped to prepare a preform (preformed body before resin impregnation), the preform is placed in a molding die and the die is closed, a resin is injected to impregnate and cure the preform, and then the die is opened to remove the molded product. Additionally, as a type of RTM method, for example, VaRTM method, SCRIMP (Seeman's Composite Resin Infusion Molding Process) method, and CAPRI (Controlled Atmospheric Pressure Resin Infusion) method described in Japanese Patent Application Laid-Open No. 2005-527410, which evacuates a resin supply tank to a pressure lower than atmospheric pressure, uses circulation compression, and controls net molding pressure to more appropriately control the resin injection process, particularly VaRTM method, can also be used. Furthermore, a film stacking method in which a fiber substrate is sandwiched between resin sheets (films), a method of adhering powdered resin to a reinforcing fiber substrate for improved impregnation, a molding method using a fluidized bed or a fluid slurry method in the process of mixing a resin with a fiber substrate (Powder Impregnated Yarn), and a method of blending resin fibers with a fiber substrate can also be used.

Examples of carbon fibers include acrylic, pitch-based, and rayon-based carbon fibers, among which acrylic carbon fibers with high tensile strength is preferably used. As forms of carbon fibers, twisted yarn, untwisted yarn, and non-twisted yarn can be used, but untwisted yarn or non-twisted yarn is preferably used because of a good balance between moldability and strength characteristics of the fiber reinforced composite material.

The cured product of the curable resin composition of the present embodiment can be used in various applications other than the above-mentioned CFRP applications, and examples include adhesives, paints, coating agents, molding materials (including sheets, films, CFRP, etc.), sealing materials for semiconductor devices, sealing materials for liquid crystal display devices, sealing materials for organic EL devices, electrical and electronic components such as printed wiring boards (BGA substrates, build-up substrates, etc.), and 3D printing, as well as additives for other resins, etc.

Examples of the adhesives include adhesives for civil engineering, construction, automotive, general office, and medical use, as well as adhesives for electronic materials. Among these, adhesives for electronic materials include interlayer adhesives for multilayer substrates such as build-up substrates, die bonding agents, semiconductor adhesives such as underfill, underfill for BGA reinforcement, anisotropic conductive films (ACF), mounting adhesives such as anisotropic conductive paste (ACP), etc., which are suitable for various applications.

The cured product of the curable resin composition of the present embodiment preferably has a flexural elastic modulus of 2.5 GPa to 5.0 GPa, and more preferably 3.0 GPa or more and 4.0 GPa. In the case of the flexural elastic modulus being less than 2.5 GPa, the rigidity is insufficient for a carbon fiber reinforced composite material, leading to decreased reliability, which is not preferable. Further, in the case of the flexural elastic modulus being greater than 5.0 GPa, the material becomes brittle, which is not preferable.

In the case of applying the curable resin composition of the present embodiment to a sealing material for a semiconductor device, a lead frame and a semiconductor package substrate including the semiconductor device are installed in a mold, and the curable resin composition of the present embodiment can be molded by a melt casting method or transfer molding method, injection molding method, compression molding method, etc., and further heated at 80°C to 200°C for 2 hours to 10 hours to obtain a cured product. Examples of semiconductor devices manufactured using this sealing material include potting, dipping, transfer mold sealing for capacitors, transistors, diodes, light emitting diodes, IC, LSI, etc., potting sealing for COB, COF, TAB, and the like of IC and LSI, underfill for flip chips, sealing during mounting of IC packages such as QFP, BGA, and CSP (including reinforcing underfill), etc.

In the case of applying the curable resin composition of the present embodiment to printed wiring board applications, a prepreg can also be obtained by heating and melting to reduce viscosity and impregnating reinforcing fibers such as glass fibers and polyamide fibers. Specific examples thereof include glass fibers such as E glass cloth, D glass cloth, S glass cloth, Q glass cloth, spherical glass cloth, NE glass cloth, and T glass cloth, and/or organic fibers, but are not particularly limited thereto. The shape of the substrate is not particularly limited, and examples include woven fabric, non-woven fabric, roving, chopped strand mat, etc. As weaving methods for woven fabric, plain weave, huck weave, twill weave, etc. are known, and these known methods can be appropriately selected and used according to the intended applications and performance. Additionally, glass woven fabric that has been subjected to fiber opening treatment or surface treatment with a silane coupling agent or the like is preferably used. The thickness of the substrate is not particularly limited, and is preferably about 0.01 mm to 0.4 mm. Furthermore, a prepreg can also be obtained by impregnating the reinforcing fibers with the varnish, and heating and drying, and based on this, a copper clad laminate (CCL) can be formed. By hot press molding the obtained prepreg and CCL, a laminate using the curable resin composition of the present embodiment can also be produced. The laminate is not particularly limited as long as the laminate includes one or more prepregs, and may have any other layers. Additionally, a sheet-like adhesive can be obtained by applying the varnish on a release film and removing the solvent under heating to achieve B-staging. This sheet-like adhesive can be used as an interlayer insulating layer in multilayer substrates or as an adhesive sheet when mounting semiconductors. Furthermore, the curable resin composition of the present embodiment can be suitably used for special substrate materials such as package substrates and HDI (high density interconnect).

In addition, the water absorption rate is preferably 2.0% or less, more preferably 1.5% or less, and particularly preferably 1.2% or less. In the case of the water absorption rate exceeding 2.0%, the cured product adsorbs moisture, causing the material to soften significantly and resulting in low mechanical strength, which is not preferable.

### Examples

The present invention will be described more specifically below by citing synthesis examples and examples. The materials, processing contents, processing procedures, etc. shown below can be appropriately modified without departing from the spirit of the present invention. Therefore, the scope of the present invention should not be interpreted in a limiting manner by the specific examples shown below.

Various analytical methods used in the examples are described below.

Various analytical methods were performed under the following conditions.
• Epoxy equivalent
   Measured by the method described in JIS K-7236, and the unit is g/eq.
• Softening point
   Measured by a method in accordance with JIS K-7234, and the unit is °C.
• Melt viscosity
   Measured by ICI melt viscosity (150°C) cone plate method, and the unit is Pa·s.

### • GPC (gel permeation chromatography) analysis

Manufacturer: Waters
Column: Guard column SHODEX GPC KF-601, KF-602 KF-602.5, KF-603
Flow rate: 0.5 ml/min.
Column temperature: 40°C
Solvent used: THF (tetrahydrofuran)
Detector: RI (differential refractive index detector)

### • High performance liquid chromatography (HPLC) measurement Liquid delivery unit LC-20AD manufactured by Shimadzu Corporation

Photodiode array detector SPD-M20A manufactured by Shimadzu Corporation
Column oven CTO-20A manufactured by Shimadzu Corporation
Column: Inertsil ODS-2, 5 µm, 4.6 mm×250 mm 40°C
Mobile Phase A: acetonitrile (AN)
Mobile Phase B: water (W)

### Time Program:

### (Synthesis Example 2)

0 min.-10 min. AN/W=60%/40%→100%/0%
10 min.-20 min. AN/W=100%/0%

### (Comparative Synthesis Examples 2, 4)

0 min.-28 min. AN/W=50%/50%→100%/0%
28 min.-40 min. AN/W=100%/0%
Flow Rate: 1.0 mL/min.
Detection: UV 274 nm, PDA

### [Synthesis Example 1]

500 parts by weight of para-cresol, 87.5 parts by weight of water, and 37.5 parts by weight of sodium hydroxide were charged into a flask equipped with a stirrer, a reflux condenser, and a stirring device. After stirring and dissolution, the mixture was heated to 110°C, and 100 parts by weight of furfural was added dropwise over 1 hour. After reacting at 110°C for 3 hours, the temperature was raised to 145°C. During the temperature rise, water that distilled out was removed from the system. After reaching 145°C, the mixture was cooled to 80°C, 100 parts by weight of water was charged, and 4 parts by weight of phosphoric acid and 79 parts by weight of 35% hydrochloric acid were added for neutralization. After repeated washing with water, unreacted phenol was distilled off under heating and reduced pressure to obtain 219 parts by weight of phenolic resin represented by the following formula (3A).

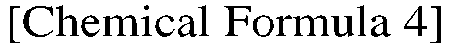

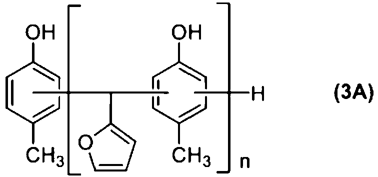

### [Synthesis Example 2]

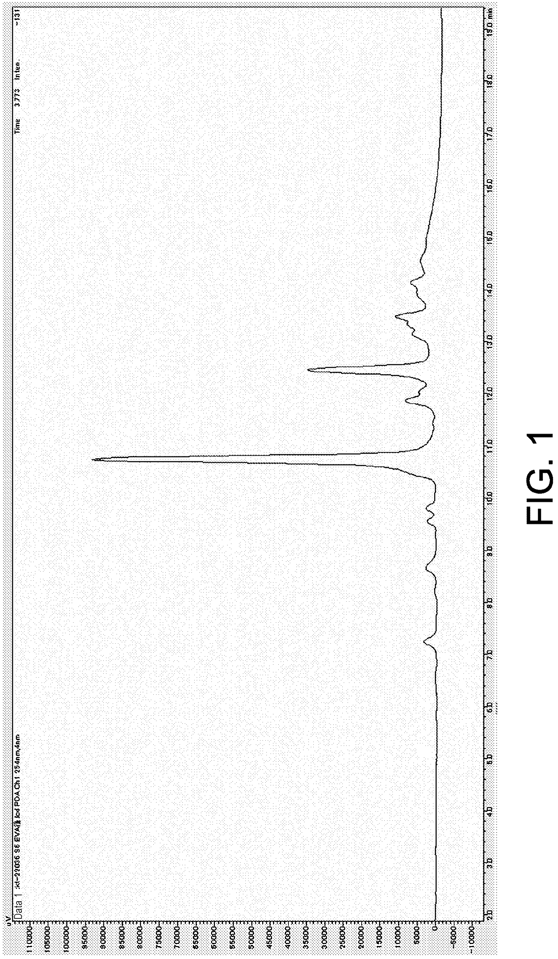

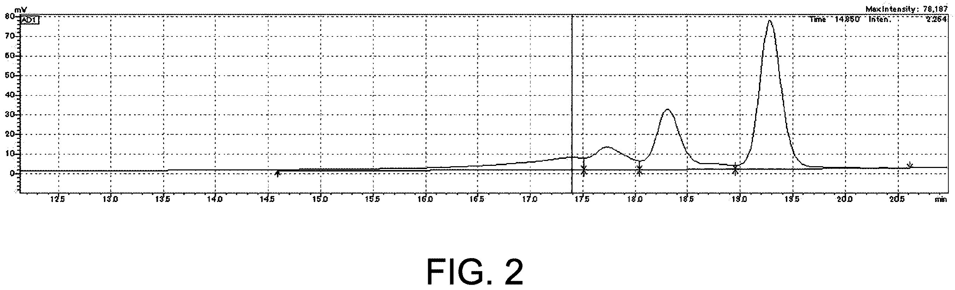

Relative to 77 parts by weight of the phenolic resin obtained in Synthesis Example 1, 229 parts by weight of epichlorohydrin (ECH, hereinafter the same), 40 parts by weight of dimethyl sulfoxide (DMSO, hereinafter the same), and 13 parts by weight of water were charged into a reaction vessel. After heating, stirring, and dissolution, while maintaining the temperature at 55°C, 23 parts by weight of flake sodium hydroxide was charged in portions over 1.5 hours. Thereafter, the reaction was further carried out at 55°C for 1.5 hours and at 70°C for 30 minutes. Then, after repeated washing with water to remove DMSO and by-product salt, excess epichlorohydrin was distilled off from the oil layer under heating and reduced pressure, and 217 parts by weight of methyl isobutyl ketone was added to the residue and dissolved. This methyl isobutyl ketone solution was heated to 70°C, and 22 parts by weight of methanol, 22 parts by weight of water, and 5 parts by weight of 30% sodium hydroxide aqueous solution were added. After reacting for 1 hour, washing of the reaction solution with water was repeated until the washing solution became neutral. Then, methyl isobutyl ketone was distilled off from the oil layer under heating and reduced pressure to obtain 68 parts by weight of the epoxy resin represented by the following formula (3B). The obtained epoxy resin had an epoxy equivalent of 251 g/eq, a softening point of 63.9°C, an ICI melt viscosity (150°C) of 0.06 Pa·s, and n in the following formula (3B) was 1.9. The HPLC results are shown in FIG. 1, and the GPC results are shown in FIG. 2.

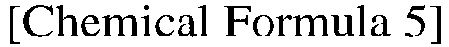

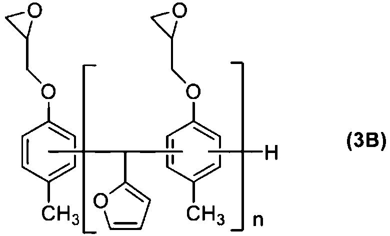

### [Comparative Synthesis Example 1]

254 parts by weight of phenol, 63 parts by weight of water, and 27 parts by weight of sodium hydroxide were charged into a flask equipped with a stirrer, a reflux condenser, and a stirring device. After stirring and dissolution, the mixture was heated to 110°C, and 44 parts by weight of furfural was added dropwise over 2 hours. After reacting at 110°C for 3 hours, the temperature was raised to 145°C. During the temperature rise, water that distilled out was removed from the system. After reaching 145°C, the mixture was cooled to 80°C, 63 parts by weight of water was charged, and 4 parts by weight of phosphoric acid and 63 parts by weight of 35% hydrochloric acid were added for neutralization. After repeated washing with water, unreacted phenol was distilled off under heating and reduced pressure to obtain 107 parts by weight of phenolic resin represented by the following formula (4A).

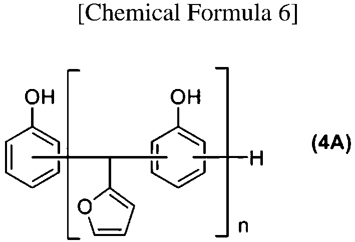

### [Comparative Synthesis Example 2]

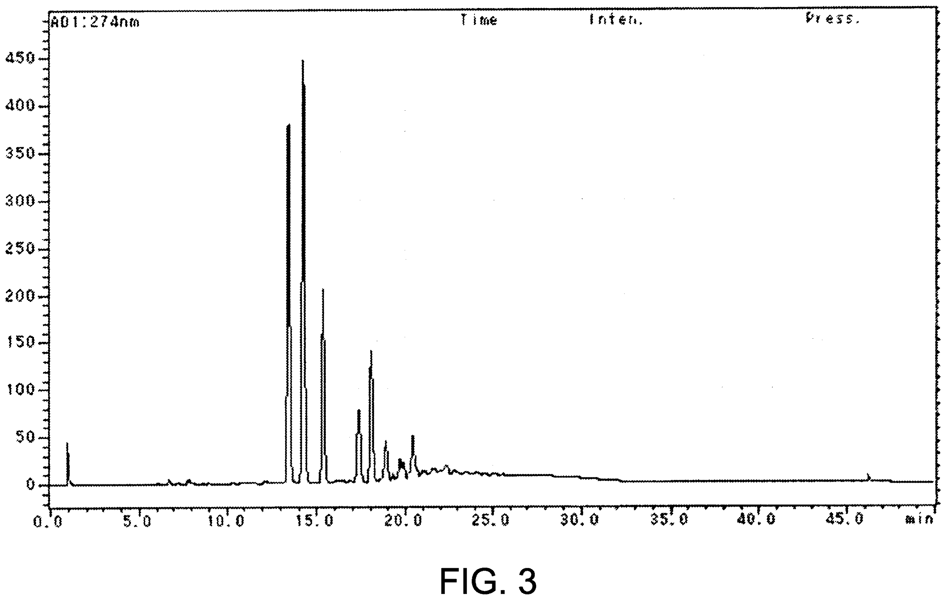

Relative to 78 parts by weight of the phenolic resin obtained in Comparative Synthesis Example 1, 254 parts by weight of epichlorohydrin (ECH, hereinafter the same), 64 parts by weight of dimethyl sulfoxide (DMSO, hereinafter the same), and 13 parts by weight of water were charged into a reaction vessel. After heating, stirring, and dissolution, while maintaining the temperature at 45°C, 23 parts by weight of flake sodium hydroxide was charged in portions over 2 hours. Thereafter, the reaction was further carried out at 45°C for 2 hours and at 70°C for 60 minutes. Then, after repeated washing with water to remove by-product salt and dimethyl sulfoxide, excess epichlorohydrin was distilled off from the oil layer under heating and reduced pressure, and 218 parts by weight of methyl isobutyl ketone was added to the residue and dissolved. This methyl isobutyl ketone solution was heated to 70°C, and 7 parts by weight of 30% sodium hydroxide aqueous solution was added. After reacting for 1 hour, washing of the reaction solution with water was repeated until the washing solution became neutral. Then, methyl isobutyl ketone was distilled off from the oil layer under heating and reduced pressure to obtain 97 parts by weight of the epoxy resin represented by formula (4). The obtained epoxy resin had an epoxy equivalent of 211 g/eq, a softening point of 44°C, an ICI melt viscosity (150°C) of 0.06 Pa·s, and n in the following formula (4B) was 2.1. The HPLC results are shown in FIG. 3.

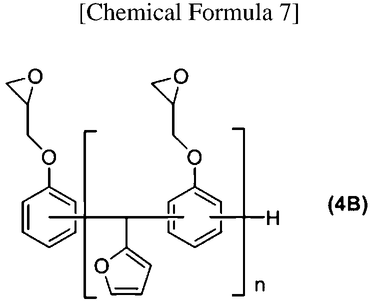

### [Comparative Synthesis Example 3]

According to Example 7 of Japanese Patent Application Laid-Open No. 2001-64339, 432 parts by weight of orthocresol, 93 parts by weight of water, and 40 parts by weight of sodium hydroxide were charged into a flask equipped with a stirrer, a reflux condenser, and a stirring device. After stirring and dissolution, the mixture was heated to 110°C, and 78 parts by weight of furfural was added dropwise over 2 hours. After reacting at 110°C for 3 hours, the temperature was raised to 145°C. During the temperature rise, water that distilled out was removed from the system. After reaching 145°C, the mixture was cooled to 80°C, 92 parts by weight of water was charged, and 6 parts by weight of phosphoric acid and 92 parts by weight of 35% hydrochloric acid were added for neutralization. After repeated washing with water, unreacted phenol was distilled off under heating and reduced pressure to obtain 210 parts by weight of phenolic resin represented by the following formula (5A).

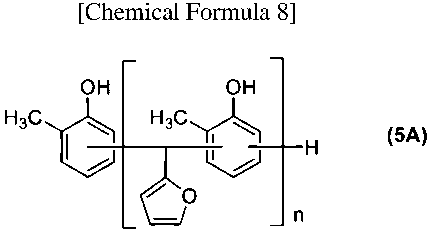

### [Comparative Synthesis Example 4]

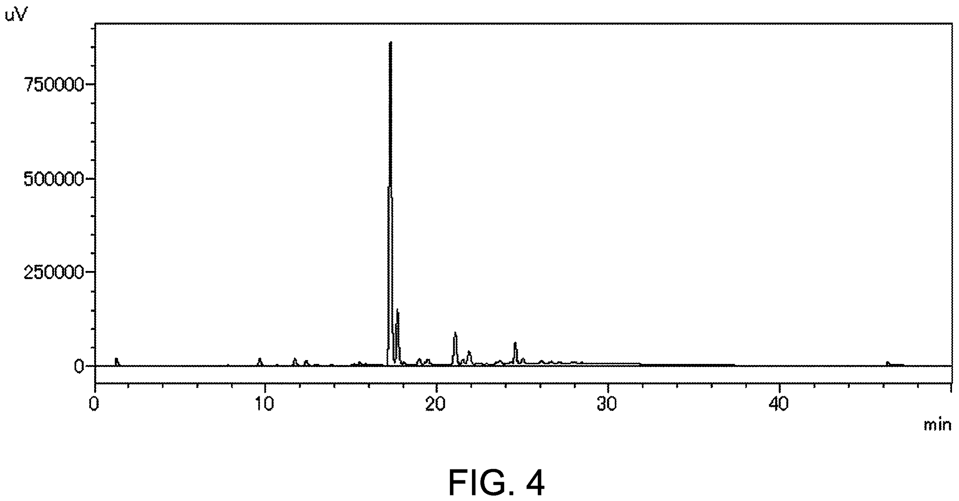

Relative to 94 parts by weight of the phenolic resin obtained in Comparative Synthesis Example 3, 248 parts by weight of epichlorohydrin (ECH, hereinafter the same), 44 parts by weight of dimethyl sulfoxide (DMSO, hereinafter the same), and 13 parts by weight of water were charged into a reaction vessel. After heating, stirring, and dissolution, while maintaining the temperature at 45°C, 25 parts by weight of flake sodium hydroxide was charged in portions over 2 hours. Thereafter, the reaction was further carried out at 45°C for 2 hours and at 70°C for 60 minutes. Then, after repeated washing with water to remove by-product salt and dimethyl sulfoxide, excess epichlorohydrin was distilled off from the oil layer under heating and reduced pressure, and 256 parts by weight of methyl isobutyl ketone was added to the residue and dissolved. This methyl isobutyl ketone solution was heated to 70°C, and 5 parts by weight of 30% sodium hydroxide aqueous solution was added. After reacting for 1 hour, washing of the reaction solution with water was repeated until the washing solution became neutral. Then, methyl isobutyl ketone was distilled off from the oil layer under heating and reduced pressure to obtain 116 parts by weight of the epoxy resin represented by the following formula (5B). The obtained epoxy resin had an epoxy equivalent of 231 g/eq, a softening point of 50.1°C*,* an ICI melt viscosity (150°C) of 0.06 Pa·s, and n in the following formula (5B) was 1.6. The HPLC results are shown in FIG. 4.

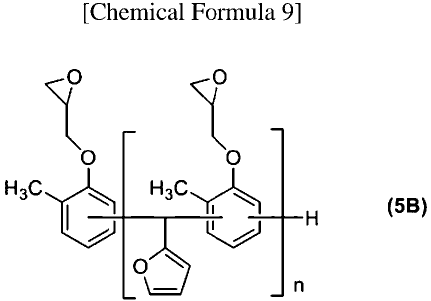

Using the epoxy resins obtained in Synthesis Example 2 and Comparative Synthesis Examples 2 and 4 as main agents, and 4,4'-methylenebis(2,6-diethylaniline) (abbreviation; M-DEA, manufactured by Tokyo Chemical Industry Co., Ltd., active hydrogen equivalent 78 g/eq.) as a curing agent, the components were mixed in the weight ratios shown in the formulation composition of Table 1 and cured under curing conditions of 160°C for 6 hours to prepare cured products.

The physical property values were measured under the following conditions.
<Flexural Elastic Modulus Measurement Conditions>
   • Measured according to JIS K-7074.
<Water Absorption Rate>
   • Water absorption rate: Weight increase rate (%) after boiling a disk-shaped test specimen with a diameter of 5 cm × thickness of 4 mm in water at 100°C for 24 hours

**[Table 1]**

| | | Example 1 | Comparative Example 1 | Comparative Example 2 |
|---|---|---|---|---|
| Main agent | Epoxy resin obtained in Synthesis Example 2 | 76.3 | | |
| | Epoxy resin obtained in Comparative Synthesis Example 2 | | 73.3 | |
| | Epoxy resin obtained in Comparative Synthesis Example 4 | | | 74.9 |
| Curing agent | M-DEA | 23.7 | 26.7 | 25.1 |
| Cured product properties | Flexural elastic modulus [GPa] | 3.2 | 2.8 | 2.9 |
| | Water absorption rate [%] | 1.1 | 1.6 | 1.0 |

From the results in Table 1, it was confirmed that Example 1 has a high flexural elastic modulus and excellent low water absorption.

## Claims

1. An epoxy resin, represented by following formula (1): 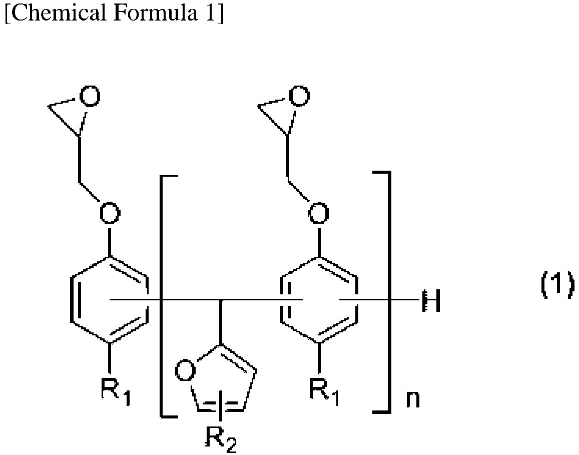 (in formula (1), a plurality of R₁ independently represent a hydrocarbon group having 1 to 10 carbon atoms, R₂ represents a hydrogen atom or a hydrocarbon group having 1 to 10 carbon atoms, and n is an average value of the number of repetitions and is a real number satisfying 1<n<15).

2. The epoxy resin according to claim 1, wherein R₁ in the formula (1) is a methyl group.

3. A curable resin composition, comprising the epoxy resin according to claim 1, and a curing agent.

4. The curable resin composition according to claim 3, which is for carbon fiber reinforced plastic.

5. A cured product, obtained by curing the curable resin composition according to claim 3 or 4.
